# EUROPÄISCHE PATENTSCHRIFT

(11) **EP 1 374 514 B1**
(45) Veröffentlichungstag und Bekanntmachung des Hinweises auf die Patenterteilung: **31.03.2010**
(21) Anmeldenummer: 02714060.7
(22) Anmeldetag: 22.02.2002
(51) Int. Cl.: H04L 27/06, G06K 19/07

(54) **DEMODULATOR FÜR AMPLITUDENSPRUNGMODULIERTE (ASK) SIGNALE**
DEMODULATOR FOR AMPLITUDE SHIFT KEY (ASK)-MODULATED SIGNALS
LA DEMODULATION D'UNE TENSION MODULEE PAR CHANGEMENT DE L'AMPLITUDE (ASK)

(30) Priorität: 04.04.2001 DE 10116874; 04.04.2001 DE 10116747
(43) Veröffentlichungstag der Anmeldung: 02.01.2004
(73) Patentinhaber: Infineon Technologies AG, 85579 Neubiberg (DE)
(72) Erfinder: KUPNIK, Mario, A-8700 Leoben (AT); MELCHER, Gebhard, A-8045 Weinitzen (AT); SCHLAGER, Tobias, A-8062 Kumberg (AT); KARGL, Walter, A-8020 Graz (AT); NEUHOLD, Ernst, A-8071 Hausmannstätt (AT)
(74) Vertreter: Viering, Jentschura & Partner
(86) Internationale Anmeldenummer: PCT/DE2002/000668
(87) Internationale Veröffentlichungsnummer: WO 2002/082634

(56) Entgegenhaltungen:
- EP-A- 0 940 769
- FR-A- 2 751 148

## Beschreibung

Die Erfindung betrifft eine Schaltungsanordnung zur Demodulation einer durch Wechsel der Amplituden zwischen einem niedrigen und einem hohen Pegel (ASK-) modulierten Spannung gemäß Patentanspruch 1. Derartige Schaltungsanordnungen sind z.B. aus der FR-A-2 751 148 und der EP-A-0 940 769 bekannt.

Beim Einsatz von kontaktlosen Chipkarten und ähnlichen, wie beispielsweise sogenannte kontaktlose Tags, wird häufig eine sogenannte ASK-Modulation eingesetzt. Man versteht hierunter ein hochfrequentes Signal, das mit in digitaler Form vorliegenden Daten zwischen einem ersten und einem zweiten Pegel wechselt, und somit das hochfrequente Signal moduliert.

So wie bei digitalen Daten zwischen "Ja" und "Nein" oder "1" und "0" oder "high" und "low" unterschieden wird, wird zwischen einer hohen Amplitude und einer niedrigen Amplitude unterschieden. Hierbei sind zur Zeit die beiden Modulationsarten ASK 100 und ASK 10 üblich, wobei ASK 100 einen Pegelunterschied von 100% und ASK 10 einen Pegelunterschied von 10% bedeutet. Es sind jedoch auch andere Unterschiede möglich und die nachfolgend beschriebene Erfindung ist nicht auf diese " beiden üblichen Modulationsarten eingeschränkt.

Das Problem der ASK-Modulation ist darin zu sehen, daß es auch durch eine Änderung im Abstand zwischen Sender und Empfänger des so modulierten Signales bei Gleichbleiben der Amplitude des ausgesendeten Signales, empfängerseitig zu einer Änderung der empfangenen Amplitude kommt, wenn der Abstand sich verändert. Gleiches gilt, wenn im Zwischenraum zwischen Sender und Empfänger Unterschiede eintreten.

Als erschwerend kommt hinzu, daß bei der Verwendung von Signalen, die stets auf "Null" zurückkehren, d.h. zwischen zwei binären "einsen" kehrt das Signal auf "Null" zurück, und Signalen die dies nicht vorsehen, unterschiedlich lange "0"- und "1"-Sequenzen moduliert und übertragen werden.

Der Erfindung liegt somit die Aufgabe zugrunde, eine Demodulatorschaltung vorzusehen, mit der mit möglichst geringem Aufwand sicher der Pegelwechsel zwischen zwei Zuständen bei ASK-Modulationen erkannt wird.

Diese Aufgabe wird erfindungsgemäß durch die im Patentanspruch 1 angegebenen Maßnahmen gelöst. Die angegebene Schaltung weist den Vorteil auf, daß beim Vergleich der beiden Ladespannungen der Wechsel des Modulationspegels leicht erkennbar ist.

Nachfolgend wir die Erfindung unter Bezugnahme auf die Zeichnung im einzelnen erläutert.

Es zeigen:
Figur 1 ein erstes Ausführungsbeispiel der erfindungsgemäßen Schaltungsanordnung,
Figur 2 die Hüllkurve eines ASK-modulierten Signales,
Figur 3 einen beispielhaften Verlauf der ersten und zweiten Ladespannung,
Figur 4 ein zweites erfindungsgemäßes Ausführungsbeispiel,
Figur 5 ein Beispiel einer Auswerteschaltung
Figur 6 einen charakteristischen Entladeverlauf von Vref,
Figur 7 eine schaltungstechnisch dimensionierte Realisierung der Erfindung und
Figur 8 einen charakteristischen Ladeverlauf von Vref.

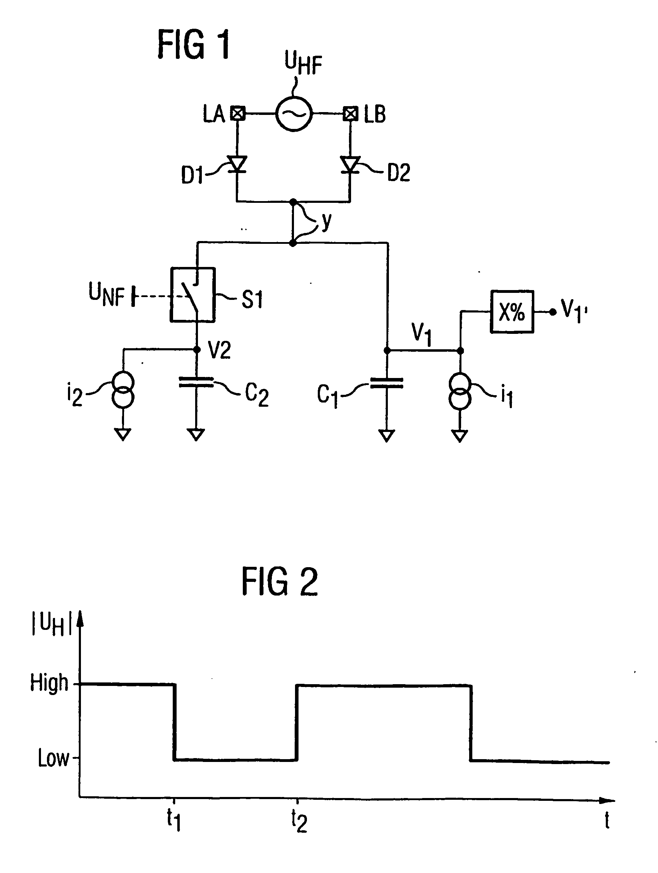

Bei dem in Figur 1 dargestellten ersten erfindungsgemäßen Ausführungsbeispiel liegt eine hochgfrequente Eingangsspannung UHF am Eingang der Demodulatorschaltung an, der durch die beiden Eingangsanschlüsse LA und LB bezeichnet ist. In Figur 2 ist die Hüllkurve des Amplitudenbetrags der hochfrequenten Eingangsspannung über der Zeit aufgetragen. Wie zu sehen ist, wechselt sie zwischen einem hohen Amplitudenpegel, der mit "high" bezeichnet ist und einem niedrigen Amplitudenpegel, der mit "low" bezeichnet ist. Diese gleichgerichtete hochfrequente Eingangsspannung UHF liegt somit in gleichgerichteter Form am Knoten Y an. Am Knoten Y sind parallel zwei Ladeschaltungen angeschlossen, die durch die gleichgerichtete hochfrequente Spannung geladen werden.

Die erste Ladeschaltung besteht aus dem Kondensator C1 und einer Stromquelle i1, die wiederum vom Spannungsknoten V1 abgehend parallel geschaltet sind. Entsprechend ist die zweite Ladeschaltung aus dem Kondensator C2 und der Stromquelle i2 aufgebaut, die vom Stromknoten V2 ausgehend parallelgeschaltet sind. Die zweite Ladeschaltung ist über einen Ladeschalter S1 an dem Knoten Y angeschlossen. Dieser Schalter S1 wird mit der niederfrequenten Spannung UNF, mit der die hochfrequente Wechselspannung UHF moduliert ist, betätigt. In einfachster Weise ist dies mittels einer nicht dargestellten Diode möglich.

Nachfolgend wird die Funktionsweise dieser Schaltung erläutert. Solange die gleichgerichtete hochfrequente Spannung UHF am Knoten Y größer als die Spannung an den Eingangsknoten V1 und V2 der Ladeschaltungen ist und der Schalter S1 geschlossen ist, werden die Kondensatoren C1 und C2 auf den Wert der gleichgerichteten hochfrequenten Wechselspannung UHF aufgeladen. Gleichzeitig werden die Kondensatoren C1 und C2 durch die Stromquellen i1 beziehungsweise i2 entladen, wobei die Zeitkonstante der beiden Ladeschaltungen so zu wählen ist, daß sie groß gegenüber der Halbperiode der hochfrequenten Eingangsspannung UHF ist, damit es an den beiden Eingangsknoten V1 und V2 der Ladeschaltungen zu keinen wesentlichen Spannungsschwankungen (Brummen) kommt, die von den Nulldurchgängen der hochfrequenten Wechselspannung herrühren.

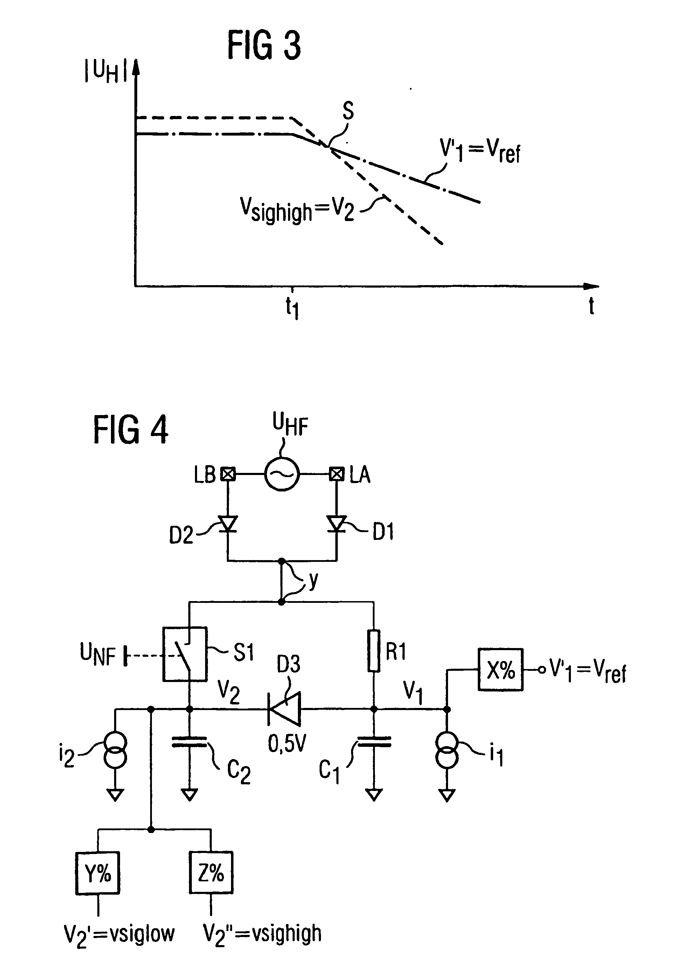

Wie in Figur 2 dargestellt, soll nunmehr die Amplitude der hochfrequenten Eingangsspannung UHF sich bis zur Zeit vor t1 auf dem "high"-Pegel befinden. Zum Zeitpunkt t1 wechselt sie über zum "low"-Pegel. Dieser Wechsel bewirkt, daß der Schalter S1 öffnet und die zweite Ladeschaltung und damit der Eingangsknoten V2 von der restlichen Schaltung abgekoppelt ist. Sind die Zeitkonstanten der ersten und zweiten Ladeschaltung unterschiedlich gewählt, kommt es zu einem unterschiedlichen Entladen der beiden Kondensatoren C1 und C2. Dies ist beispielsweise dadurch möglich, daß die beiden Kondensatoren C1 und C2 gleich groß sind, die Stromquellen i1 und i2 jedoch unterschiedlich stark sind. Das hieraus resultierende Entladeverhalten ist in Figur 3 dargestellt.

Wie der Figur 3 zu entnehmen ist, sinkt die Spannung am Knoten V2 deutlich steiler ab als die Spannung am Knoten V1. Wie in Figur 1 zu sehen ist, ist die Spannung V1 nochmals mittels eines Spannungsteilers X% auf eine Spannung auf V1' umgesetzt. Somit kommt es, wie in Figur 3 zu sehen ist, zu einem Schneiden der Entladekurven V2 und V1'. Der Schnittpunkt S ist nunmehr geeignet, um den Übergang vom "high"-Pegel zum "low"-Pegel zu kennzeichnen. Mittels einer später noch beschriebenen Auswerteschaltung ist ein solcher Schnittpunkt erfaßbar.

Gemäß Figur 4 ist eine weitere Ausgestaltung der erfindungsgemäßen Demodulatorschaltung dargestellt. Hierbei sei zunächst auf die beiden Spannungsteiler Y% und Z% verwiesen, die die Spannung des Knotens V2 in zwei unterschiedliche Spannungen V2', auch als "V siglow" bezeichnet, und V2" auch als "V sighigh" bezeichnet, umgesetzt.

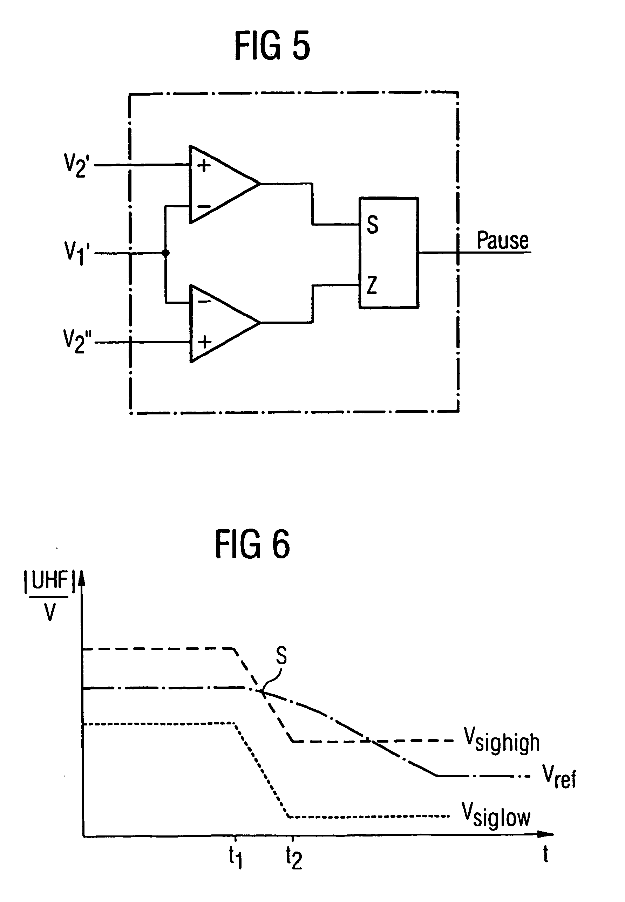

Die Schaltung gemäß Figur 4 funktioniert grundsätzlich genauso wie die gemäß Figur 1 beschriebene Schaltung. Es soll hier die Zeitkonstante der zweiten Ladeschaltung deutlich geringer sein als die der ersten Ladeschaltung, d. h. die Stromquelle i2 entlädt den Kondensator C2 deutlich schneller, als es die Stromquelle i1 am Kondensator C1. Dies ist in Figur 6 deutlich zu sehen. Die Signale V sighigh und V silow folgen somit ziemlich genau dem Pegelwechsel der hochfrequenten Eingangsspannung von "high" nach "low". Es kommt, wie auch schon in Figur 3 unter Bezugnahme auf Figur 1 beschrieben, zum Schnittpunkt S zwischen dem Signal V ref und einem Signal, das dem Spannungsigal Vsighigh entspricht.

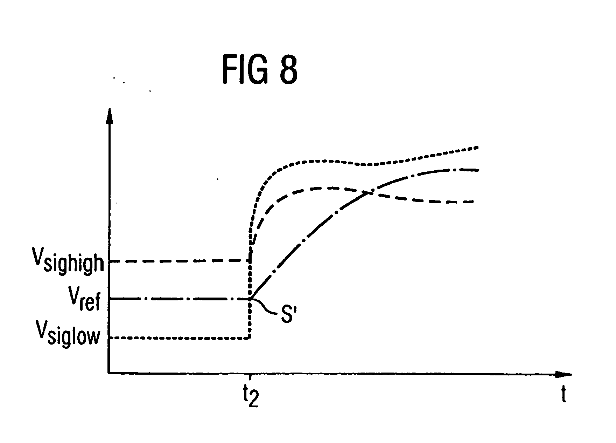

Sobald die Spannung am Spannungsknoten V2 durch das Entladen mittels der Stromquelle i2 soweit abgesunken ist, daß die Spannung unterhalb der hochfrequenten Eingangsspannung UHF liegt, schließt der Schalter S1 wieder. Das bedeutet, daß die Stromquelle i2 nunmehr über den Widerstand R1 zusätzlich den Kondensator C1 entlädt. Dies ist durch den steilerwerdenden Entladeverlauf von V ref in Figur 6 ab dem Zeitpunkt t2 erkennbar. Kommt es nunmehr zu einem Pegelwechsel der hochfrequenten Spannung UHF von "low" nach "high", werden die Kondensatoren C1 und C2 der Ladeschaltungen wieder aufgeladen und es kommt, wie in Figur 8 dargestellt, zu einem Schnittpunkt S' zwischen der Kurve V ref und V siglow.

Die Diode D3 sorgt dafür, daß zwischen V1 und V2 jeweils nur eine Spannungsdifferenz entsprechend dem Spannungsabfall über dieser Diode D3 besteht. Somit wird die Spannung an beiden Knotenpunkten auch bei großen Modulationshüben wie beispielsweise ASK 100, bei der die Amplitude der hochfrequenten Eingangsspannung in die Nähe von 0 Volt beim Pegel "low" gelangt, parallel geführt. Auf diese Weise ist es auch bei diesen hohen Modulationssprüngen sichergestellt, daß stets ein einwandfreier Schnittpunkt zwischen V sighigh und V ref ermittelbar ist.

In Figur 5 ist eine mögliche Auswerteschaltung für die Signale V ref entsprechend V1', V2' entsprechend V sighigh und V2" entsprechend V siglow, dargestellt. Hierbei wird V1' jeweils an den negativen Eingang von zwei Differenzverstärkern gelegt und V sighigh beziehungsweise V siglow jeweils an den positiven Eingang. Die Ausgänge der Differenzverstärker wiederum sind, wie dargestellt, auf ein RS-Flipflop geschaltet. Am Ausgang des RS-Flipflops wird dann ein Signal entsprechend einem "high"-Pegel oder einem "low"-Pegel ausgegeben. Es sind jedoch auch andere Auswerteschaltungen denkbar.

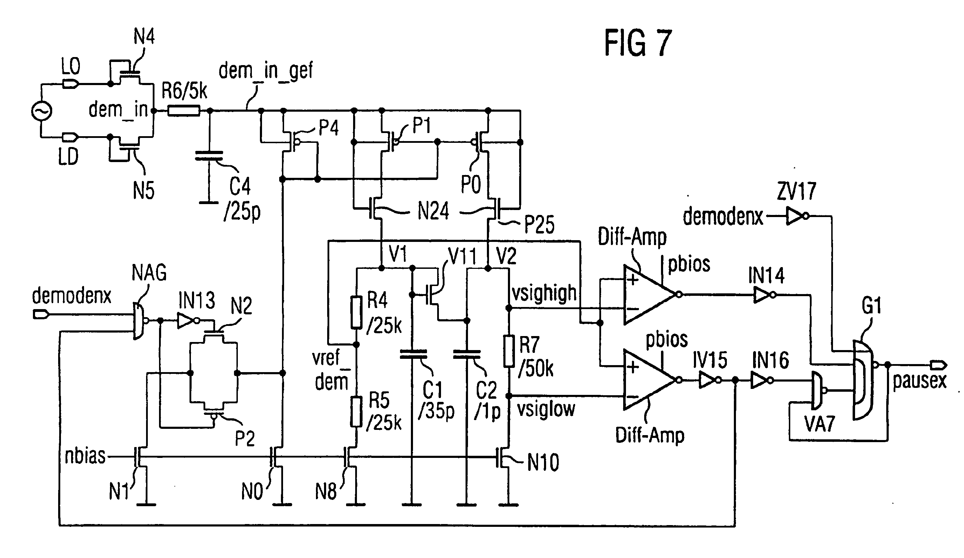

Figur 7 zeigt die Schaltungstechnische Realisierung der Erfindung in einer üblichen CMOS-Technologie. Hierbei liegt auch die Eingangswechselspannung an den Eingangsanschlüssen LO und LD an. Die Dioden D1 bis D2 der vorangegangenen Ausführungsbeispiele sind in dieser Technologie entsprechend mit Transistoren N4, N5 und N11 gebildet.

Im Anschluß an die Gleichrichterschaltung ist ein Tiefpaß-Vorfilter zur Unterdrückung der Trägerfrequenz vorgesehen.

Im Gegensatz zu der Ladeschaltung der vorhergehenden Ausführungsbeispiele ist eine schwebende Stromspiegelschaltung aus den p-Kanal Transistoren P1 und P0 vorgesehen. Diese Stomspiegelschaltung lädt die Kondensatoren C1 und C2, an denen die Stromsenken aus den n-Kanal Transitoren N8 und N10 angeschlossen ist. Das Verhältnis des von der Stromspiegelschaltung gelieferten Ladestroms zum Entladestrom bestimmt die jeweilige Ladezeitkonstante der Kondensatoren C1 und C2. Die Wiederstände R4, R5 und R7 realisieren die bereits im Zusammenhang mit den vorhergehenden Ausführungsbeispielen erläuterten Spannungsteiler, die die der Fensterschaltung zugeführten Signale vref_dem, vsighigh und vsiglow liefern.

Die zuvor erwähnten Dioden N24 und N25 entkoppeln die Spannungen V1 und V2, sobald die Eingangsspannung unter den Spannungspegel von V1 bzw. V2 sinkt.

Die Diode N11 hat die gleiche Funktion wie die zuvor erläuterte Diode D3.

Zusätzlich zu den früheren Ausführungsbeispielen ist vorgesehen, daß bei Erkennung eines hohen Modulationsgrades am Ausgangssignal pausex ein entsprechendes Steuersignal demodenx am Gatter NA6 zugeführt wird. Dieses betreibt die zwei parallelen Stomsenken N1 und N0, die in Reihe mit dem Stromspiegel P4 geschaltet sind. Der Stromspiegel P4 ist wiederum parallel zu den Stromspielschaltungen P1 und P0 geschaltet, wodurch der Ladestrom der Kondensatoren um ein vielfaches erhöht wird. Dies gewährleistet eine unverminderte Detektionsbandbreite, da der eingeschwungene Zustand auch bei Aussteuerung mit großem Hub beschleunig Wiederhesgestellt wird.

Die Auswertung der Signale vrefdem, vsighigh und vsiglow erfolg ansonsten analog zu den vorhergehenden Ausführungsbeispielen.

Die Dimensionierungsgrößen der Schaltung sind der Schaltung direkt entnehmbar.

Die Erfindung ist insgesamt jedoch nicht auf das Dimensionierungsbeipiel eingeschränkt.

### Bezugszeichenliste

- V1: erster Eingangsknoten
- V2: zweiter Eingangsnoten
- C1: Kondensator
- C2: Kondensator
- I1: Stromquelle
- I2: Stromquelle
- D1: Gleichrichterschaltung
- D2: Gleichrichterschaltung
- Y: Ausgangsknoten
- S1: Entkoppeleinricht (Schalter)

## Patentansprüche

1. Schaltungsanordnung zur Demodulation einer durch Wechsel der Amplitude zwischen einem niedrigen und einem hohen Pegel (ASK)-modulierten Spannung, mit einer einem Hochfrequenzeingang (LB, LA) nachfolgenden Gleichrichterschaltung (D1, D2;N4,N5), einer ersten Ladeschaltung (C1, i1;C1, P1) und einer zweiten Ladeschaltung (C2, i2;C2,i2,P2), die parallel geschaltet mit einem Ausgang (Y) der Gleichrichterschaltung (D1, D2;N4,N5) verbunden sind und die jeweils eine Ladespannung (V1, V2) erzeugen, **dadurch gekennzeichnet, dass** eine Entkoppeleinrichtung (S1;N24,N25) vorhanden ist, die die Ladespannungen (V1, V2) bei einem vorgebenen Verhältnis zwischen der jeweiligen Ladespannung (V1, V2) einer Eingangsspannung (UHF) der Gleichrichtschaltung (D1, D2;N4,N5) entkoppelt und eine Auswerteschaltung, die aus dem Verhältnis der Ladespannungen (V1, V2) einen Modulationspegel ermittelt.

2. Schaltungsanordnung nach Anspruch 1, bei der die Ladeschaltung eine schwebende Stromspiegelschaltung (P1;P0) aufweist.

3. Schaltungsanordnung nach Anspruch 1, bei der die Ladespannung (V1) zumindest einer Ladeschaltung (C1, i1; C2 i2), mittels eines Spannungswandlers (X%) geändert wird.

4. Schaltungsanordnung nach Anspruch 1 oder 2, bei der die erste und die zweite Ladeschaltung (C1, i1; C2 i2) bei einem vorbestimmten Verhältnis der Ladespannungen (V1, V2) über eine Diode (D3;N11) miteinander gekoppelt werden.

5. Schaltungsanordnung nach einem der vorhergehenden Ansprüche, bei der die Spannung der zweiten Ladeschaltung in zwei verschiedene spannungen gewandelt wird.

6. Schaltungsanordnung nach einem der vorhergehenden Ansprüche, bei der die erste und die zweite Ladeschaltung unterschiedliche Entladezeiten aufweisen.

7. Schaltungsanordnung nach einem der vorhergehenden Ansprüche, bei der eine Umschaltvorrichtung (NA6) vorgesehen ist, die ab einem vorgegebenen Modulationsgrad eine Ladestrom verstärkungsschaltung (P4,N1, N0, N2, P2) einschaltet.

## Claims

1. A circuit configuration for demodulating an (ASK)-modulated voltage having an amplitude alternating between a low level and a high level, comprising:
a high-frequency input (LB, LA), a downstream connected rectifier circuit (D1, D2; N4, N5);
a first charging circuit (C1, i1; C1, P1) and a second charging circuit (C2, i2; C2, i2, P2) which are connected in parallel to an output (Y) of the rectifier circuit (D1, D2; N4, N5) and
which each produce a charging voltage (V1, V2) **characterized in that** there is a decoupling device (S1; N24, N25) for decoupling the charging voltages (V1, V2) at a prescribed ratio between the respective charging voltage (V1, V2) of an input voltage (UHF) of the connected rectifier circuit (D1, D2; N4, N5) and an evaluation circuit for ascertaining a modulation level from the ratio of the charging voltages (V1, V2).

2. The circuit configuration according to claim 1, wherein the charging circuit comprises a floating current-mirror circuit (P1; P0).

3. The circuit configuration according to claim 1, wherein the charging voltage (V1) of at least one charging circuit (C1, i1; C2, i2) is changed by a voltage transformer (X%).

4. The circuit configuration according to claim 1 or 2, wherein the first and the second charging circuit (C1, i1; C2, i2) are coupled together via a diode (D3; N11) at a predetermined ratio between the charging voltages (V1, V2).

5. The circuit configuration according to one of the preceding claims, wherein the voltage of the second charging circuit is converted into two different voltages.

6. The circuit configuration according to one of the preceding claims, wherein the first charging circuit and the second charging circuit have different discharge times.

7. The circuit configuration according to one of the preceding claims, further comprising
a changeover apparatus (NA6) for turning on a charging-current amplification circuit (P4, N1, N0, N2, P2) from a prescribed degree of modulation onwards.

## Revendications

1. Montage de démodulation d'une tension modulée par changement de l'amplitude entre un niveau bas et un niveau haut (ASK), comprenant un dispositif (D1, D2, N4, N5) redresseur suivant une entrée (LB, LA) de haute fréquence, un premier circuit (C1, i1, C1, P1) de charge et un deuxième circuit (C2, i2, C2, i2, P2) de charge, qui, montés en parallèle, sont reliés à une sortie (Y) du circuit (D1, D2, N4, N5) redresseur et qui produisent respectivement une tension (V1, V2) de charge, **caractérisé en ce qu'**il y a un dispositif (S1, N24, N25) de découplage, qui découple les tensions (V1, V2) de charge pour un rapport prescrit entre la tension (V1, V2) respective de charge d'une tension (UHF) dans l'entrée du circuit (D1, D2, N4, N5) redresseur et un circuit d'exploitation, qui détermine un niveau de modulation à partir du rapport des tensions (V1, V2) de charge.

2. Montage suivant la revendication 1, dans lequel le circuit de charge a un circuit (P1, P0) de niveau de courant flottant.

3. Montage suivant la revendication 1, dans lequel la tension (V1) de charge d'au moins un circuit (C1, i1, C2, i2) de charge est modifié au moyen d'un convertisseur (X%) de tension.

4. Montage suivant la revendication 1 ou 2, dans lequel le premier et le deuxième circuits (C1, i1, C2, i2) de charge sont couplés entre eux par une diode (D3, N11) pour un rapport déterminé à l'avance des tensions (V1, V2) de charge.

5. Montage suivant l'une des revendications précédentes, dans lequel la tension du deuxième circuit de charge est transformée en deux tensions différentes.

6. Montage suivant l'une des revendications précédentes, dans lequel le premier et le deuxième circuits de charge ont des temps de décharge différents.

7. Montage suivant l'une des revendications précédentes, dans lequel il est prévu un dispositif (NA6) de commutation, qui, à partir d'un degré de modulation prescrit, met hors circuit un circuit (P4, N1, N0, N2, P2) amplificateur du courant de charge.
